# EUROPEAN PATENT APPLICATION

(11) **EP 3 422 185 A1**
(43) Date of publication of application: **02.01.2019**
(21) Application number: 17774016.4
(22) Date of filing: 28.02.2017
(51) Int. Cl.: G06F 9/50

(54) **PROCESSING SYSTEM AND PROCESSING METHOD**

(30) Priority: 28.03.2016 JP 2016063537
(71) Applicant: Hitachi, Ltd., Tokyo 100-8280 (JP)
(72) Inventor: MATSUURA Yoshiki, Tokyo 100-8280 (JP); KINOSHITA Masafumi, Tokyo 100-8280 (JP); MIYATA Tatsuhiko, Tokyo 100-8280 (JP); YOSHIUCHI Hideya, Tokyo 100-8280 (JP)
(74) Representative: Manitz Finsterwald Patentanwälte PartmbB
(86) International application number: PCT/JP2017/007902
(87) International publication number: WO 2017/169471

(57) **Abstract**

A processing system includes an allotment server to receive events and to distribute the events to a plurality of processing servers and an entry server to set pieces of information to the allotment server, in which the events include types of events and data items used upon the plurality of processing servers executing data processing; the entry server divides the pieces of data processing of the processing servers into groups based on the data items; allots a message to the groups; and transmits the pieces of information on the types of events, the message, the data items and the processing servers whose pieces of data processing are grouped to the allotment server while the allotment server stores the pieces of information as received from the entry server on the types of events, the message, the data items and the processing servers whose pieces of data processing are grouped; upon receiving the events, specifies the message corresponding to the received events based on the data items included in the received events and the stored data items; selects the processing server to which the specified message is to be transferred according to load applied to the processing servers within the groups; and transfers the specified message to the selected processing server.

## Description

### Technical Field

The present invention relates to a processing system and a processing method.

### Background Art

With the analysis processing of the data derived from devices, the number of devices subjected to such analysis and the pieces of data derived from them have been increasing to a great extent. When such data derived from devices are utilized by the plurality of applications in a real time manner, such a high-performance analysis processing system is desired as enabling load distribution to be carried out according to the amount of data while allotting such data to analysis processing required by such applications.

As an example of the prior arts in the relevant field, there is disclosure in the paragraph [0007] of PTL 1 saying 'a load distribution system to set an allotment rule to a context-dependent allotter such that events required for each of processing servers to carry out a predetermined processing rule are distributed in a proper manner by disposing a plurality of processing servers and arranging the context-dependent allotter anterior to the respective processing servers'.

Then, there is disclosure in the paragraph [0076] of PTL 1 saying 'by the predetermined processing rule being allotted to each of the processing servers, it prevents load from concentrating on some of the processing servers and allows the processing rules having the same event conditions or such conditions partly in common to be concentrated on the specific processing server' and there is also disclosure in the paragraph [0099] of PTL 1 saying 'allowing the event copies to be minimized and the resources of the system to be utilized with efficiency'.

### Citation List

### Patent Literature

PTL1: Japanese Patent Unexamined Application Publication No. 2006-309701

### Summary of Invention

### Technical problem

It is for sure that the events can be allotted to each processing server according to the allotment rule employing the load distribution system disclosed in PTL 1. However, upon analyzing the driving data of the plurality of vehicles, on account that the driving condition of each vehicle dynamically changes, there are cases where load might be lopsided to the specific server with the system in which such allotment rule is statistically predetermined. There is no disclosure in PTL 1 on addressing such dynamical change.

Further, with the driving data of the vehicles, they include a number of data items for each event inclusive of data items unnecessary for analysis, so that such resources as communication means and storage means are uselessly wasted on such unnecessary data items.

In view of the foregoing, the present invention is to provide a processing system which distributes data processing according to such dynamical change employing a smaller number of pieces of information on such data items. Solution to Problem

In order to solve the above issue, the representative processing system according to the present invention is characterized in including an allotment server to receive events and to distribute the events to a plurality of processing servers and an entry server to set pieces of information to the allotment server, wherein the events include types of events and data items used upon the plurality of processing servers executing data processing; the entry server, to which the pieces of information on the types of events and the data items and the pieces of information on the data processing of the processing servers and the data items are input, divides pieces of the data processing of the processing servers into groups based on the data items; allots a message to the groups; and transmits the pieces of information on the types of events, the message, the data items and the processing servers whose pieces of data processing are grouped to the allotment server while the allotment server stores the pieces of information as received from the entry server on the types of events, the message, the data items and the processing servers whose pieces of data processing are grouped; upon receiving the events, specifies the message corresponding to the received events based on the data items included in the received events and the stored data items; selects the processing server to which the specified message is to be transferred according to load applied to the processing servers within the groups; and transfers the specified message to the selected processing server.

### Advantageous Effects of Invention

The present invention allows a processing system which distributes data processing according to the dynamical change employing a smaller number of pieces of information on the data items to be provided. Brief Description of Drawings

Figure 1 is a view illustrating one example of the whole arrangement of the system according to the first example.
Figure 2 is a view illustrating one example of the arrangement of the allotment processing server.
Figure 3 is a view illustrating one example of the arrangement of the analysis processing server.
Figure 4 is a view illustrating one example of the table of the event-message definition storage unit.
Figure 5 is a view illustrating one example of the table of the server load management storage unit.
Figure 6 is a view lustrating one example of the table of the message allotment management storage unit.
Figure 7 is a view illustrating one example of the table of the message-processing program definition storage unit.
Figure 8 is a view illustrating one example of the table of the message execution management storage unit.
Figure 9 is a view illustrating one example of the operational flow of the message item extraction unit and the server selection unit.
Figure 10 is a view illustrating one example of the operational flow of the sub-message generation unit.
Figure 11 is a view illustrating one example of the operational flow of the processing program call-out unit.
Figure 12 is a view illustrating one example of the operational sequence as a whole.
Figure 13 is a view illustrating one example of the arrangement of the message setting entry server.
Figure 14 is a view illustrating one example of the sub-message setting and entry screen.
Figure 15 is a view illustrating one example of the table of the event master management storage unit.
Figure 16 is a view illustrating one example of the table of the processing program master management storage unit.
Figure 17 is a view illustrating one example of the table of the message management storage unit.
Figure 18 is a view illustrating one example of the table of the processing program disposition management storage unit.
Figure 19 is a view illustrating one example of the operational flow of the message generation processing unit.
Figure 20 is a view illustrating one example of the processing program-message item correspondence table.
Figure 21 is a view illustrating one example of the entire arrangement of the system according to the second example.
Figure 22 is a view illustrating one example of the arrangements of the allotment processing server and the allotment management server.
Figure 23 is a view illustrating one example of the operational sequence of the allotment processing server and the allotment management server.

### Description of Embodiments

Hereafter, the modes for carrying out the invention according to the first and second examples are explained with reference to the accompanying drawings. To note, in the accompanying drawings, reference to which is made in the following examples, the features with the same reference signs represent the same ones and their structures and operations are identical to each other.

### (First Example)

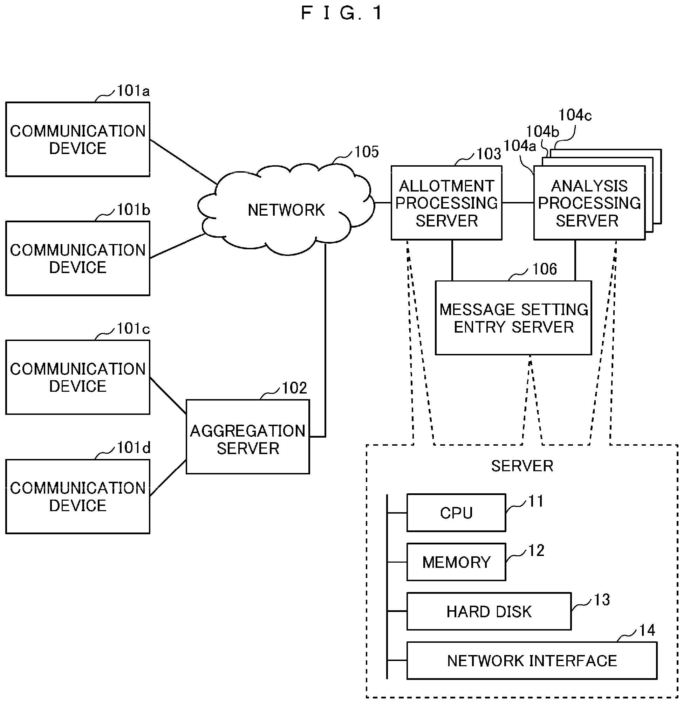

Figure 1 is a view illustrating one example of the whole arrangement of the system according to the first example. The system includes a plurality of communication devices 101 (hereinafter, these devices with reference signs 101a to 101d not being represented individually, but each of them being represented simply with the reference sign 101); an allotment processing server 103 connected through e.g. a network 105 to the communication device 101; an analysis processing server 104 connected to the allotment processing server 103; and a message setting and entry server 106 which distributes information to the allotment processing server 103 ad the analysis processing server 104. To note, the allotment processing server 103 and the analysis processing sever 104 may be simply referred to as the allotment server and the processing server respectively.

The communication device 101 may not be directly connected to the network 105, but be connected through an aggregation server 102 to the network 105 in the same way as the communication devices 101c and 101d. The communication device 101 includes such devices having communication function as sensor devices, tablet terminals, recent smart meters and vehicles. According to the present example, a vehicle is exemplified as the communication device 101, based on which e.g. the data items are exemplified below.

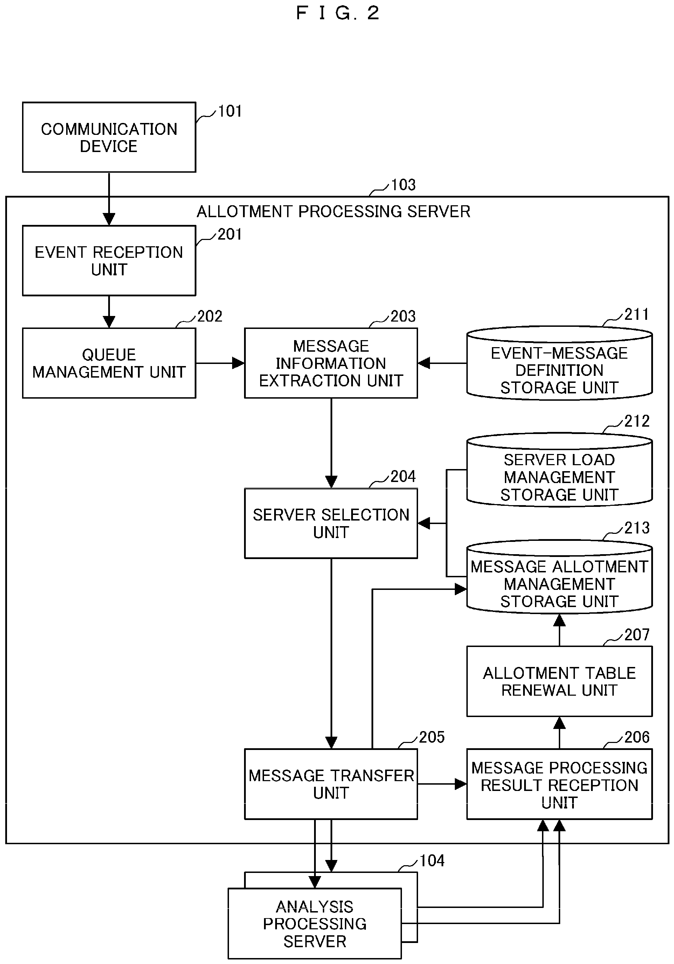

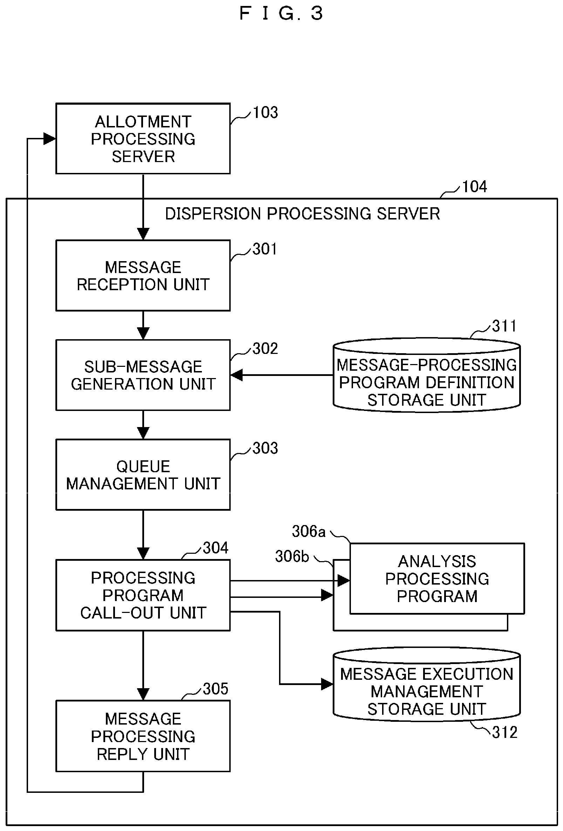

The network 105 is either a wireless one or a wired one provided by e.g. a communication carrier. The arrangements of the allotment processing server 103 and the analysis processing server 104 are explained in detail with reference to the illustrations of Figs. 2 and 3. To note, these servers are arranged such that such components provided with a general computer as a CPU (Central Processing Unit) 11, a memory 12, a hard disk 13 and a network interface 14 are connected to one another through a bus.

The number of these components of such servers may be plural; the hard disk 13 may be a semiconductor drive; and the servers may be free from the hard disk 13 or do without the same. Further, the processing of the respective servers may be separate physical machines or by separate virtual machines.

Figure 2 is a view illustrating one example of the arrangement of the allotment processing server 103. The allotment processing server 103 includes an event reception unit 201 to receive an event transmitted by the communication device 101; a queue management unit 202 to temporarily store the event; a message information extraction unit 203 to pick out the event from the queue and to extract message information corresponding to the event so as to specify a message; a server selection unit 204 to select an analysis processing server 104 to which the specified message is to be transferred; a message transfer unit 205 to transfer the message to the selected analysis server 104; a message processing result reception unit 206 to receive notice on completion of analysis processing of the message from the analysis processing server 104; and an allotment table renewal unit 207 to delete information on the message for which the analysis processing is over.

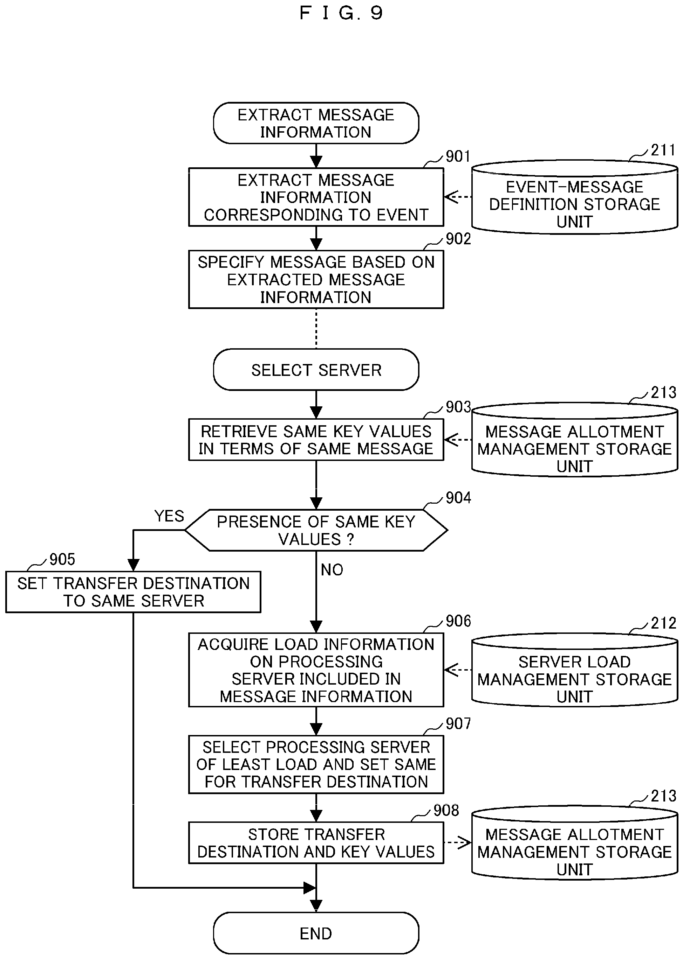

Each of these units is operated by a program corresponding to each unit being developed mainly on the memory and the program being executed by the CPU. Among such programs, the operational flow of the message information extraction unit 203 and the server selection unit 204 is explained in detail later with reference to the illustration of Figure 9. To note, some or all of the respective units may be arranged with an exclusive circuit or the program of each of such units may be executed by the separate CPUs.

Further, the allotment processing server 103, to store pieces of information vital to operate each unit, retains an event-message definition storage unit 211 to manage a message specified for an event and to manage the analysis processing server 104 to which such message is to be transferred; a server load management storage unit 212 to manage load information on the analysis processing server 104; and a message allotment management storage unit 213 to manage the relation between the key value of the transferred message and the analysis processing server 104 to which the message is to be transferred.

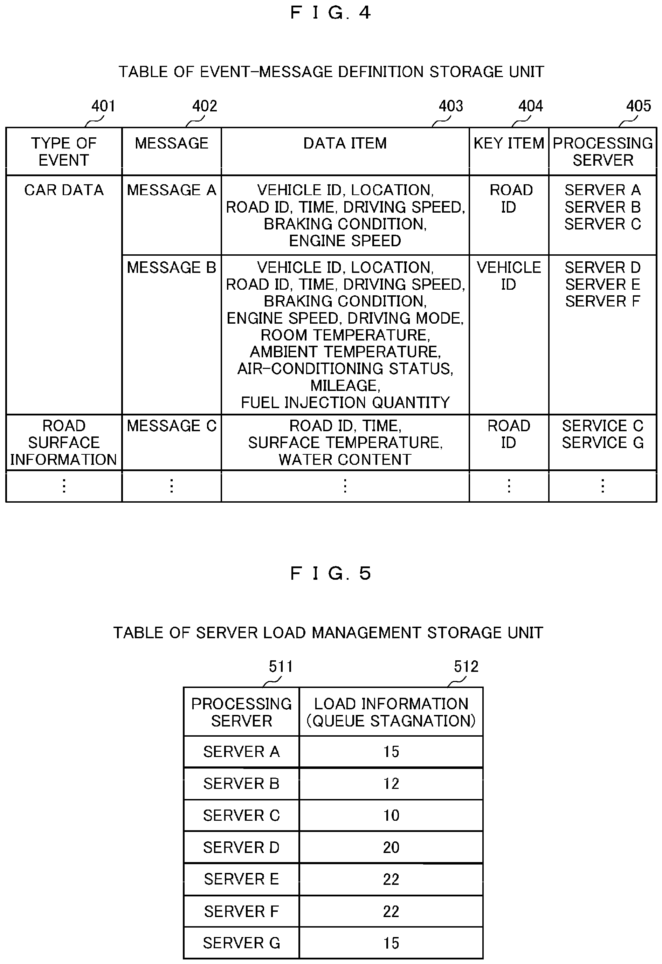

Such pieces of information are managed e.g. in the form of database and managed mainly on the hard disk or the memory especially when it is required to process them with high speed. As with pieces of the detailed table information of each storage unit, they are explained later with reference to the illustrations of Figs. 4 to 6 taking pieces of information on a vehicle as an example.

Figure 3 is a view illustrating one example of the arrangement of the analysis processing server 104. The analysis processing server 104 includes a message reception unit 301 to receive a message transferred from the allotment processing server 103; a sub-message generation unit 302 to generate a sub-message from the message when there are plural analysis processing programs corresponding to the message; a queue management unit 303 to temporarily store the message or the sub-message; a program call-out unit 304 to pick out the message or the sub-message from the queue and to call out an analysis processing program 306 corresponding to the message or the sub-message; and a message processing reply unit 305 to notice the allotment processing server 103 of completion of the analysis processing upon completion of the program.

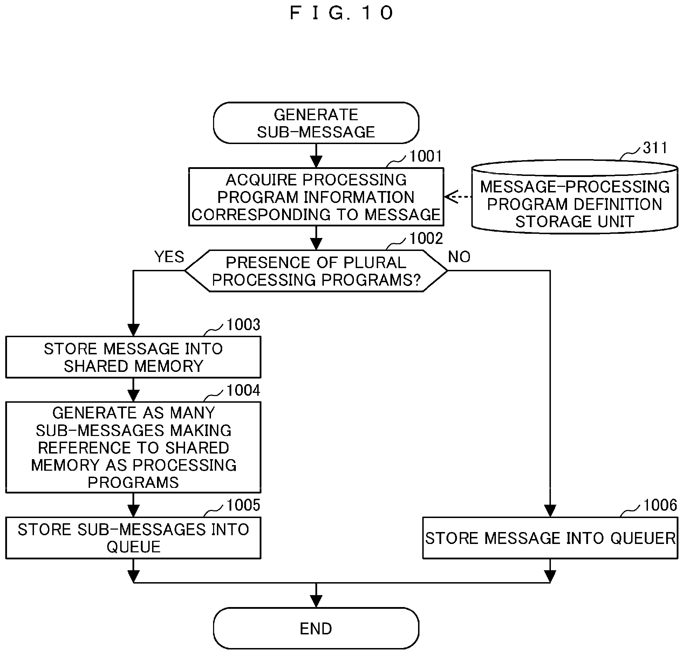

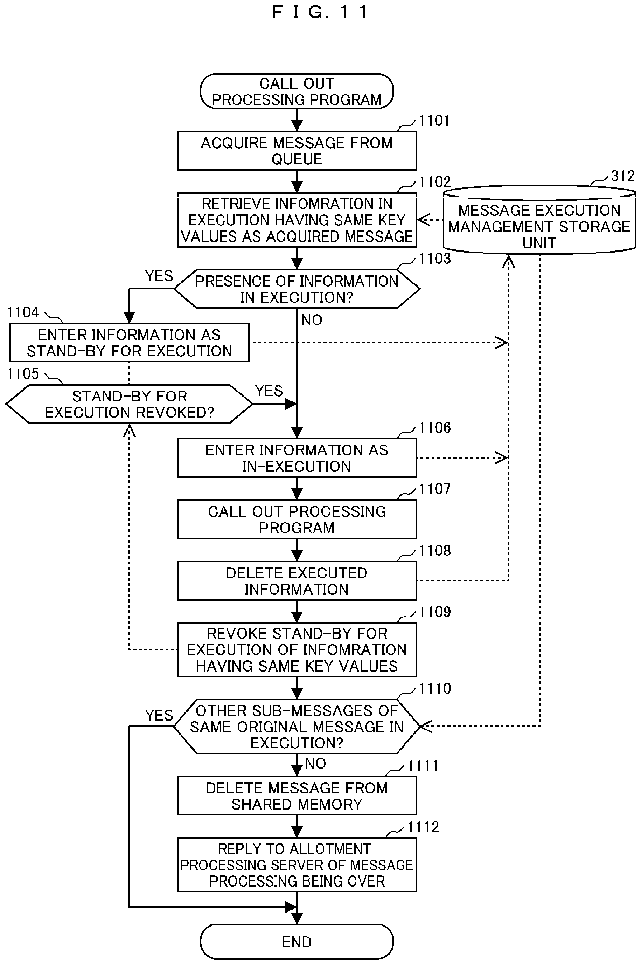

Each of these units is operated by a program corresponding to each unit being developed mainly on the memory and the program being executed by the CPU. Among such programs, the operational flow of the sub-message generation unit 302 and the program call-out unit 304 is exemplarily explained in detail later with reference to the illustrations of Figs.10 and 11. To note, some or all of the respective units may be arranged with an exclusive circuit or the program of each of such units may be executed by the separate CPUs.

The analysis processing program 306 may be in plurality in terms of programs and such plural programs may be different from each other in terms of their contents, so that the analysis processing program is expressed as it is, but may be operated as an analysis processing unit.

Further, the analysis processing server 104, to store pieces of information vital to operate each unit, retains a message-processing program definition storage unit 311 to define the analysis processing program 306 to be called out for the received message and the sub-message to be generated and a message execution management storage unit 312 to manage the analysis processing program 306 in execution.

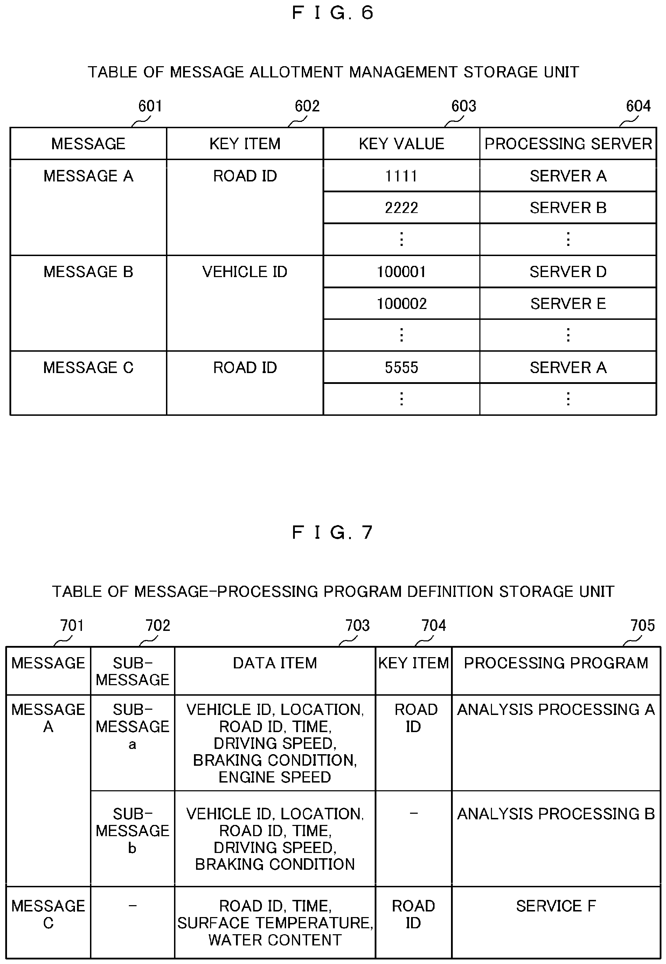

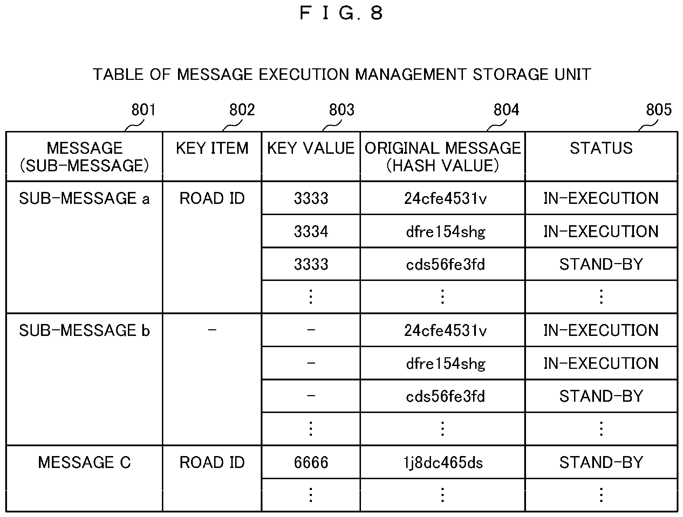

Such pieces of information are managed e.g. in the form of database and managed mainly on the hard disk or the memory especially when it is required to process them with high speed. As with pieces of the detailed table information of each storage unit, they are exemplarily explained later with reference to the illustrations of Figs. 7 and 8 taking pieces of information on a vehicle as an example.

Figure 4 is a view illustrating one example in which an event-message definition storage unit 211 retained in the allotment processing server 103 is arranged with a table. The event-message definition storage unit 211 stores pieces of information on the message specified for the received event and pieces of information on the analysis processing server 104 which are transferrable for each and every message.

In this example, pieces of information including types of events 401, a message 402 corresponding to each type of events, data items 403 included in each message, a key item 404 among the data items which is the key for allotting the message to the analysis processing server 104 and a processing server 405 which is information on the analysis processing server 104 capable of executing the analysis processing program 306 by receiving the message are set correspondingly to one another in the table.

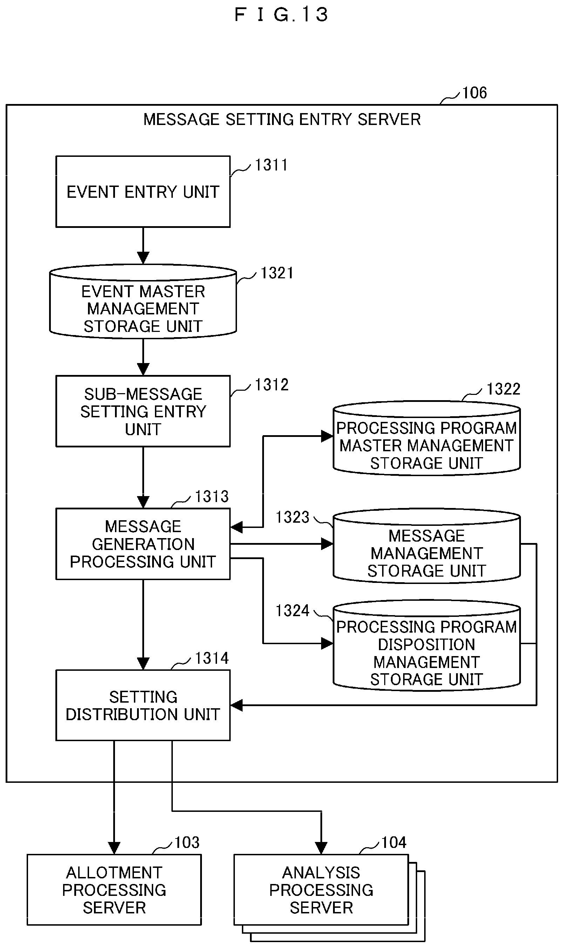

The pieces of information which the event-message definition storage unit 211 stores are those to be preliminarily set before the system is executed and the operational steps of setting such pieces of information are explained later with reference to the illustrations of Figs.13 to 20.

To note, the pieces of information on events which the event reception unit 201 receives from the communication device 101 may include some or all pieces of information corresponding to the types of events 401, the messages 402, the data items 403, and the key item 404. Further, the pieces of information on events may include the key value which is a value of the key item or include values of the data items.

The pieces of information on events which the event reception unit 201 receives are not necessarily in the form of the table of the event-message definition storage unit 211, but may be described in the form of HTML (Hypertext Markup Language) or XML (Extensible Markup Language) or may be converted into JSON (JavaScript® Object Notation).

Figure 5 is a view illustrating one example in which the server load management storage unit 212 retained within the allotment processing server 103 is arranged with a table. The server load management storage unit 212 stores information regarded as load at the time when reference is made to the analysis processing server 104 in which the analysis processing program 306 is disposed. In this example, with the scale of load applied to the analysis processing server 104 being referred to as queue stagnation, the pieces of information including a processing server 511 to identify the analysis processing server 104 and load information 512 which is the queue stagnation are set correspondingly to each other in the table.

The scale of the load information 512 may be expressed with CPU load or processing load obtained by multiplying a message stagnating in the queue by a weighted coefficient besides the queue stagnation. Such load information may be regularly renewed by an operation management server apart from the system illustrated in Figure 1 monitoring the respective analysis processing servers 104 so as to collect load information or may be exchanged in the form of additional information in the course of data exchange between the allotment processing server 103 and the analysis processing server 104.

Figure 6 is a view illustrating one example in which the message allotment management storage unit 213 retained within the allotment processing server 103 is arranged with a table. The message allotment management storage unit 213 stores the key value of the message transferred from the allotment processing server 103 and the analysis processing server 104 correspondingly to each other. In this example, for each of the message 601 and the key item 602, the key value 603 which is a value of the key item of the transferred message and the processing server 604 which is information on the analysis processing server 104 to which the message is to be transferred are set correspondingly to each other in the table.

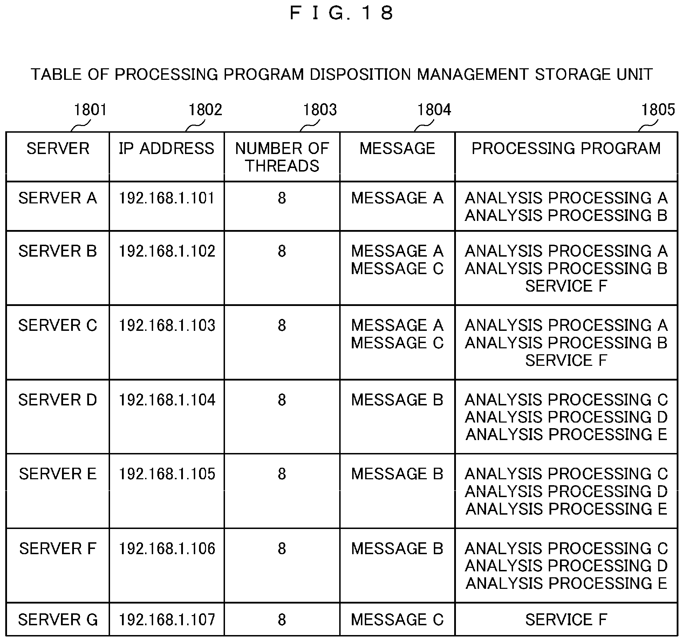

Figure 7 is a view illustrating one example in which the message- processing program definition storage unit 311 retained within the analysis processing server 104 is arranged with a table. In this example, explanation is given taking as an example a server C set in the table of a processing program disposition management storage unit 1324 illustrated in Figure 18. The server C is capable of receiving two messages or a message A and a message C, in which the message A dually corresponds to analysis processing A and analysis processing B.

Then, the message A corresponds to such dual analysis processing A and analysis processing B, so that a sub-message a and a sub-message b are defined to tell the one analysis processing from the other. To note, as with the processing program disposition management storage unit 1324, it is explained later along with the explanation of the setting of message definition information for an event given with reference to Figs.13 to 20.

The message-processing program definition storage unit 311 stores the analysis processing program 306 corresponding to the message received from the allotment processing server 103 and further stores definition information on a sub-message resulting from extracting the data items for each and every analysis processing program 306 from the message when the plurality of analysis processing programs 306 corresponds to the message.

In this example, a message 701, a sub-message 702 corresponding to the sub-message as explained above, data items 703 corresponding to those of the message or the sub-message, a key item 704 corresponding to that of the message or the sub-message and a processing program 705 which is the analysis processing program 306 corresponding to the message or the sub-message are set correspondingly to one another in the table.

The pieces of information which the message-processing program definition storage unit 311 stores are those to be preliminarily set before the system is executed in the same way as the event-message definition storage unit 211 and the operational steps of setting such pieces of information are explained later with reference to the illustrations of Figs.13 to 20.

Figure 8 is a view illustrating one example in which the message execution management storage unit 312 retained within the analysis processing server 104 is arranged with a table. In this example, explanation is given taking the server C as an example in the same way as the table example illustrated in Figure 7. The message execution management storage unit 312 stores statuses on whether or not the same key value is entered for the message or the sub-message received by the analysis processing server 104, whether the analysis processing programs 306 are in execution or stand-by for execution lest that such programs are simultaneously executed.

In this example, the pieces of information including a message 801 corresponding to information on the message or the sub-message, a key item 802 corresponding to that of the message or the sub-message, key values 803 of such key item, original messages 804 indicating that the sub-message is derived from the same message and a status 805 indicating whether the analysis processing programs 306 corresponding to the respective key values are in execution or stand-by for execution are set correspondingly to one another in the table.

The original messages 804 hereof take values obtained by the objects of the message subjected to hashing such that the message can be unequivocally specified as their identifiers, but any value may be stored in the table as far as it is identifiable that the sub-message is derived from the same message.

Figure 9 is a view illustrating one example of the operational flow from the message information extraction unit 203 to the server selection unit 204 of the allotment processing server 103 when the relevant operation is realized by a program. On account that the CPU of the allotment processing server 103 executes the program, explanation directed to either the message information extraction unit 203 or the server selection unit 204 may be centered on that of the CPU.

In the first place, the queue management unit 202 acquires an event from the event reception unit 201 within the allotment processing server 103. Then, upon the message information extraction unit 203 acquiring the event from the queue management unit 202, it extracts pieces of information on a message corresponding to the event inclusive of information on the analysis processing server 104 corresponding to the message from the event-message definition storage unit 211 (at Step 901).

For such extraction, the message information extraction unit 203 may retrieve the type of event 401 and the data item 403 of the table of the event-message definition storage unit 211 employing the types of events and the data items included in the acquired event so as to acquire pieces of information on the message 402, the key item 404 and the processing server 405 in the corresponding row of the table.

The message information extraction unit 203 specifies the messages based on the extracted pieces of information on the messages corresponding to the event (at Step 902). In this respect, the specified messages may be the same as acquired at the Step 901 or may be what is generated as messages converted into an internal expression of the allotment processing server 103 from the messages acquired at Step 901.

The server selection unit 204 selects the analysis processing servers 104 to which the messages specified by the message information extraction unit 203 are to be transferred for each and every message. In this selection, to begin with, the server selection unit 204 retrieves whether or not there are the same key values corresponding to the key items of the messages with reference to the table of the message allotment management storage unit 213 (at Step 903).

Then, if in the affirmative or the same key values are present, in order to suppress misalignment caused by the other analysis processing servers 104 simultaneously executing the analysis processing programs 306 having the same key values from occurring, the server selection unit 204 sets the transfer destinations of such specified messages to the analysis processing server 104 stored in the processing server 604 of the message allotment management storage unit 213 (at Step 905).

On the other hand, if in the negative or the same key values are not present, the server selection unit 204 acquires the values of the load information 512 of the table of the server load management storage unit 212 employing information on the analysis processing servers 104 corresponding to the messages acquired from the processing server 405 at Step 901 (at Step 906); sets the analysis processing servers 104 of least load as the destinations of the specified messages (at Step 907); and stores pieces of information on the analysis processing servers 104 corresponding to the set destination and the key values of the messages to the processing server 604 and the key value 603 of the table of the message allotment management storage unit 213 respectively (at Step 908).

In this way, the allotment processing server 103 extracts the data items required by the analysis processing program 306 for the received event while allowing the efficiency of load distribution to be enhanced with processing load e.g. in the form of exclusive control among the analysis processing servers 104 suppressed by subjecting the messages composed of the extracted data items to dynamical load distribution in accordance with the load statuses of the analysis processing servers 104 and allotting the messages having the same key values among the specified messages to the same analysis processing server 104.

To note, the message transfer unit 205 may transfer pieces of information on the messages, the key items and the key values respectively corresponding to the message 601, the key item 602 and the key value 603 to the analysis processing server 104 with the processing server 604 set in the table of the message allotment management storage unit 213 defined as the transfer destinations of the specified messages. Further, the message transfer unit may transfer other information included in the event received by the allotment processing server 103 to the analysis processing server.

Figure 10 is a view illustrating one example of the operational flow of the sub-message generation unit 302 of the analysis processing server 104 when the relevant operation is realized by a program. On account that the program is executed by the CPU of the analysis processing server 104, explanation directed to the sub-message generation unit 302 may be centered on the CPU.

In the first place, the message reception unit 301 of the analysis processing server 104 receives a message from the allotment processing server 103. Then, upon the sub-message generation 302 acquiring the message from the message reception unit 301, it acquires pieces of information on the analysis processing program 306 corresponding to the message from the message-processing program definition storage unit 311 (at Step 1001).

For this acquisition, the sub-message generation unit 302 may retrieve the message 701 of the table of the message-processing program definition storage unit 311 employing the acquired message so as to acquire plural pieces of information on the processing program 705 in the corresponding row of the table.

Then, when the message corresponds to a plurality of analysis processing programs 306 or when plural pieces of information are acquired from the processing program 705 at Step 1001, the sub-message generation unit 302 stores the message on a shared memory (at Step 1003); acquires and generates as many sub-messages which make reference to the message stored in the shared memory as the analysis processing programs 306 (at Step 1004); and stores the generated sub-messages into the queue of the queue management unit 303 (at Step 1005).

On the other hand, when the message corresponds to the sole analysis processing program 306, the sub-message generation unit 302 stores the message as it is into the queue of the queue management unit 303 because it is unnecessary to generate sub-messages from the message (at Step 1006).

To note, the analysis processing server 104 may store pieces of information on e.g. the key values besides the message received from the allotment processing server 103 on the shared memory along with the message or such pieces of information may be handled in the same way as the message with incorporated under the scope of the message. Further, the shared memory may be the memory shared among the plurality of programs within the sole analysis processing server 104.

Figure 11 is a view illustrating one example of the operational flow of the processing program call-out unit 304 of the analysis processing server 104 when the relevant operation is realized by a program. On account that the program is executed by the CPU of the analysis processing server 104, explanation directed to the processing program call-out unit 304 may be centered on the CPU.

In the first place, the processing program call-out unit 304 picks out a message or a sub-message from the queue management unit 303 (at Step 1101); and retrieves messages or sub-messages having the same key values as the picked-out message or sub-message and being in execution at the message execution management storage unit 312 (at Step 1102).

For this retrieval, the processing program call-out unit may retrieve the message 801, the key item 802 and the key value 803 of the table of the message execution management storage unit 312 employing the message or sub-message acquired from the queue management unit 303 as it is and the key items and the key values corresponding to the acquired message or sub-message and acquires information on the status 805 in the corresponding row so as to collate the acquired information with information indicating in-execution statuses.

Then, if the analysis processing program 306 is already in execution with the message or sub-message having the same key values, the processing program call-out unit 304 puts the status 805 of the table of the message execution management storage unit 312 into stand-by; enters new pieces of information from the message 801 to the status 805 based on the message or sub-message picked out at Step 1101 (at Step 1104); and waits for the stand-by being revoked (at Step 1105).

On the other hand, unless there is presence of the same key values in execution, the processing program call-out unit 304 puts the status 805 of the table of the message execution management storage unit 312 into in-execution; enters new pieces of information from the message 801 to the status 805 inclusive of the corresponding key values based on the messages or sub-messages picked out at Step 1101 (at Step 1106); and calls out the corresponding analysis processing program 306 so as to make such program execute (at Step 1107).

The processing program call-out unit 304, upon the execution of the analysis processing program 306 called out at Step 1107 being over, deletes pieces of information on the messages or sub-messages of the executed analysis processing program 306 from the message execution management storage unit 312 (at Step 1108) and any messages or sub-messages having the same key values listed in the key value 803 of the table of the message execution management storage unit 312 with the status 805 being in stand-by, revokes the stand-by (at Step 1109).

Upon being determined that the stand-by has been revoked at Step 1105, proceeding to Step 1106, the processing program call-out unit 304 modifies the status 805 of the table of the message execution management storage unit 312 from stand-by to in-execution so as to call out the analysis processing program 306 to make such program execute.

On the other hand, the processing program call-out unit 304 which has revoked the stand-by at Step 1109 determines whether or not the statuses of the other sub-messages derived from the same messages are being in execution with reference to the table of the message execution management storage unit 312 (at Step 1110). This determination is directed to whether or not the status 805 is in execution with pieces of information having the same hash values listed in the original message 804 of the table of the message execution management storage unit 312.

In turn, in case where there is only one analysis processing program 306 corresponding to the messages and any sub-messages are not generated, it is determined at Step 1110 that the execution of the analysis processing program 306 corresponding to the other sub-messages is already over because originally there is no presence of the other sub-messages.

Once it is determined that the statuses of the other sub-messages are in execution at Step 1110, the processing program call-out unit 304 ends its operation. When it is determined that the analysis processing program 306 of the other sub-messages is not in execution any more or it is determined that the execution of such program is over, the processing program call-out unit 304 deletes pieces of information on the original messages stored in the shared memory (at Step 1111).

If any sub-messages are not generated, the processing program call-out unit 304 has nothing to do at Step 1111 because any pieces of information on the original messages are not stored in the shared memory. Then, the processing program call-out unit 304 calls out the message processing reply unit 305 such that the latter returns a reply to the allotment processing server 103 to the effect that the message processing is over (at Step 1112) .

As explained above, the analysis processing server 104 additionally generates the sub-messages from the messages generated by the allotment processing server 103 such that the correspondence of such sub-messages to the plurality of analysis processing programs 306 is feasible. Then, the analysis processing server 104 generalizes the original message where the data items included in the original message are substantially the same to one another even among different analysis processing programs 306 so as to call out the analysis processing programs 306 according to the unit of the sub-message, thereby, allowing the number of messages generated by the allotment processing server 103 to be reduced so as to enhance data processing.

Further, even on the part of the analysis processing server 104 upon generating the sub-messages, it stores pieces of information included in the original message into the shared memory and causes the sub-messages to substantially play the role of the trigger to actuate the analysis processing programs 306, thereby, allowing unnecessary memory copies to be suppressed and the a plurality of analysis processing programs 306 to be executed with a smaller memory capacity.

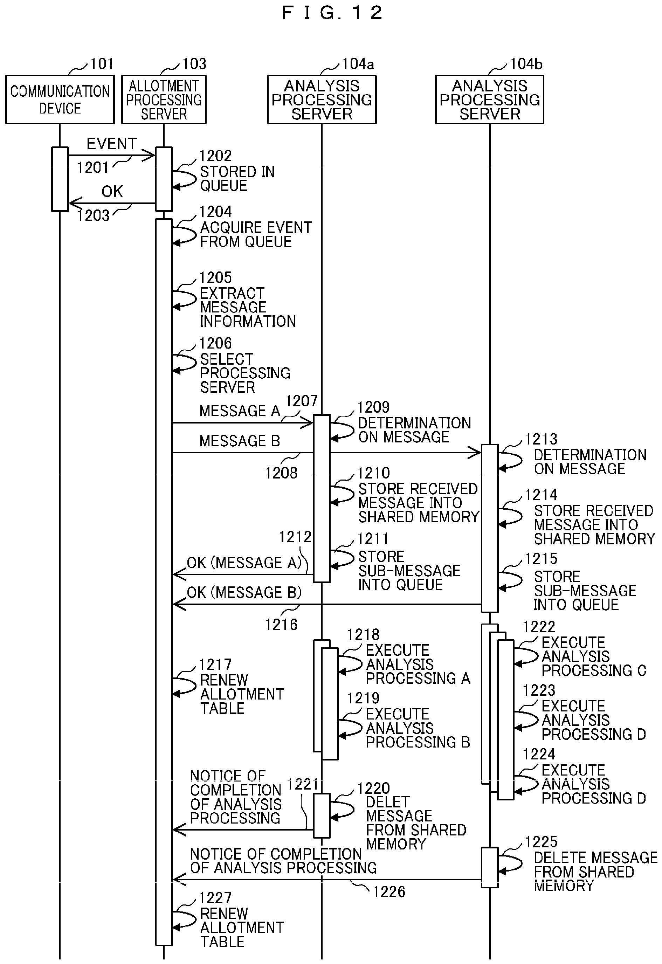

Figure 12 is a view illustrating one example of the entire operational sequence with the operational flows illustrated in Figs. 9 to 11 combined together. To begin with, the communication device 101 transmits an event (at Step 1201); upon the allotment processing server 103 receiving such event, it stores it in the queue (at Step 1202) and transmits OK to acknowledge the receipt thereof to the communication device (at Step 1203).

Upon the allotment processing server 103 acquiring the received event from the queue (at Step 1204), it specifies a message by extracting the data items from the event and extracting pieces of information on the corresponding message (at Step 1205). In this regard, if there is a plurality of messages corresponding to the event, the allotment processing server specifies such plural messages; selects the analysis processing servers 104a and 104b to which each message is to be transferred (at Step 1206); and transmits each message to the selected analysis processing servers 104a and 104b (at Step 1207 and Step 1208).

Upon each of the analysis processing servers receiving the destined message, it generates sub-messages based on the message if it is determined that there is a plurality of analysis processing programs 306 corresponding to the message (at Step 1209 and Step 1213). Where each of the analysis processing server generates the sub-messages, it stores pieces of information on the received original message into the shared memory (at Step 1210 and Step 1214); stores the sub-messages into the queue (at Step 1211 and Step 1215); and returns OK to acknowledge the receipt thereof to the allotment processing server 103 (at Step 1212 and Step 1216).

Upon the allotment processing server 103 receiving the replies from the analysis processing servers 104, it stores the relation among the messages, their key values and the analysis processing servers 104 to which such messages are to be transferred in the message allotment management storage unit 213 (at Step 1217).

Upon the analysis processing servers 104a and 104b picking out the sub-messages stored in the queue, they call out the analysis processing programs 306 corresponding to the sub-messages so as to make such programs execute (at Step 1218, Step 1219, Step 1222, Step 1223 and Step 1224); delete the messages from the shared memory if the executions of the analysis processing programs 306 end and there is no more analysis processing program 306 making reference to the messages (at Step 1220 and Step 1225); and notice the allotment processing server 103 of the completion of the analysis processing (at Step 1221 and Step 1226).

Upon the allotment processing server 103 receiving a predetermined number of completion notices, it deletes the relation among the messages, their key values and the analysis processing servers 104 to which such messages are to be transferred from the message allotment management storage unit 213 (at Step 1227). However, where analysis processing is successively performed on the same key values by the same analysis processing servers 104 even with the messages whose analysis processing is over, such relation may not necessarily be deleted from the message allotment management storage unit 213.

The timing at which the relation among the messages, their key values and the analysis processing servers to which such messages are to be transferred is deleted from the message allotment management storage unit 213 depends on how successively the analysis processing programs 306 perform analysis processing on the messages having the same key values, so that such timing may be noticed by the analysis processing programs 306.

With reference to the illustrations of Figs.1 to 12, the operational steps from the reception of an event to the analysis processing have been explained. Then, the operational steps of setting the relational definition between the event and the message as well as the relational definition between the message and the analysis processing server 104 which are preliminary definitions to make the operational steps illustrated in Figs.1 to 12 execute are explained with reference to Figs.13 to 20.

Figure 13 is a view illustrating one example of the arrangement of the message setting entry server 106 to set the relational definition between the event and the message and the relational definition between the message and the analysis processing server 104. The message setting entry server 106 includes an event entry unit 1311 to enter the types of events and the data items and a sub-message setting entry unit 1312 to set and enter the sub-messages which the analysis processing program 306 uses based on the entered events. To note, the event entry unit 1311 may enter the types of events and the data items input from the exterior of the message setting entry sever 106.

The message setting entry server 106 further includes a message generation processing unit 1313 to generate the actual messages which the allotment processing server 103 allots based on the set sub-messages from the sub-messages set at the other analysis processing servers 306 and a setting distribution unit 1314 to distribute the relational definition between the generated messages and the events and the relational definition between the messages and the corresponding analysis processing programs 306 to the allotment processing server 103 and the respective analysis processing servers 104.

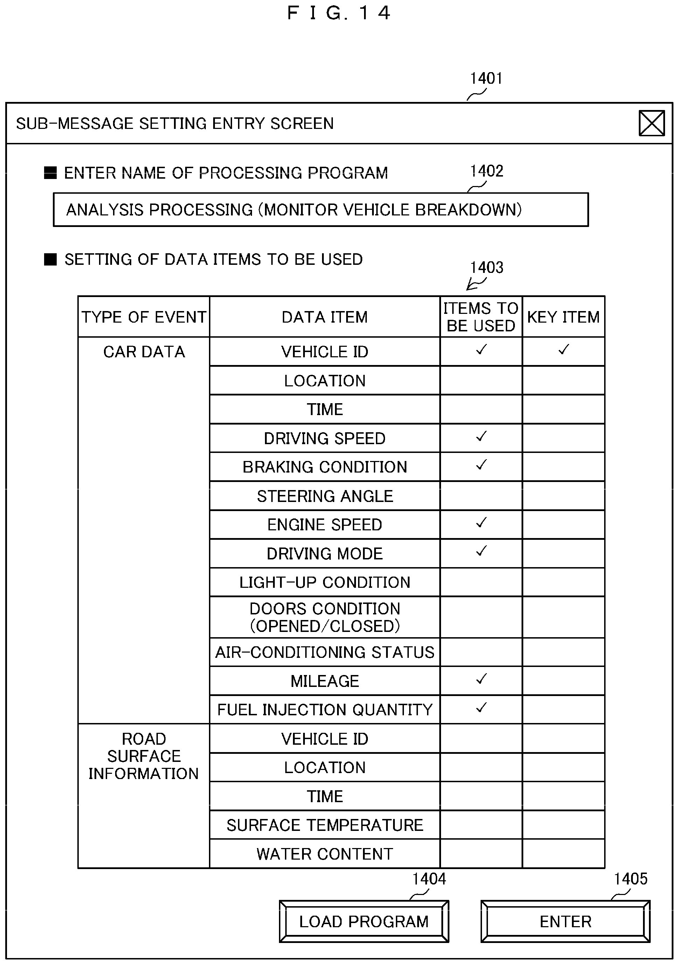

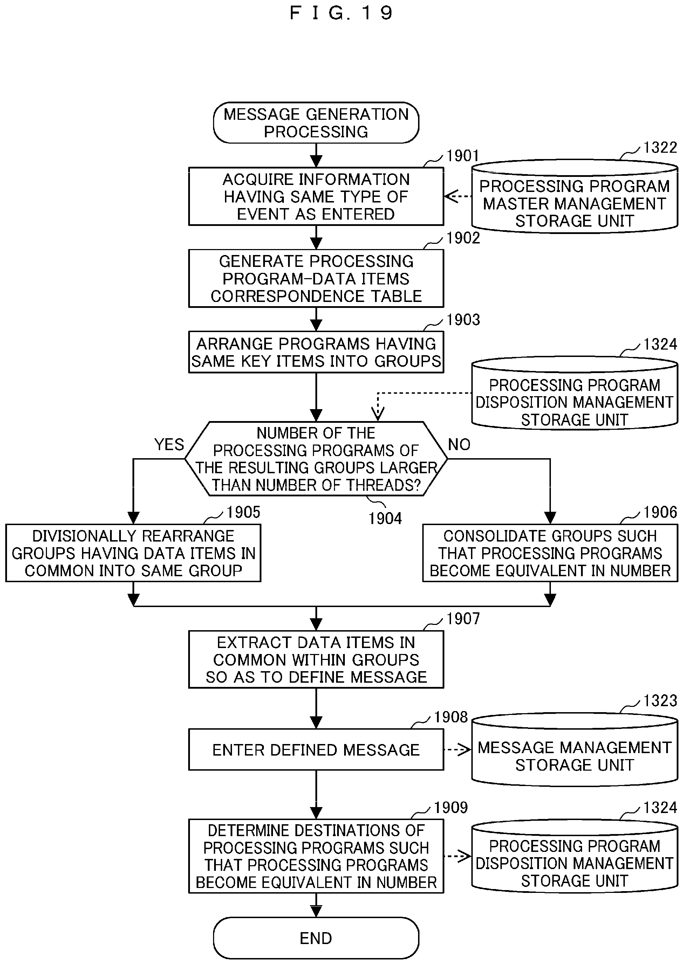

Each of these units is operated by a program corresponding to each unit being developed mainly on the memory and the program being executed by the CPU. Among such programs, one example of the setting screen of the sub-message setting entry unit 1312 is illustrated in Figure 14 and one example of the operational flow of the message generation processing unit 1313 is explained later in detail with reference to the illustration of Figure 19.

The message setting entry server 106, to store pieces of information vital to operate each unit, further retains an event master management storage unit 1321 to manage pieces of information on the events; a processing program master management storage unit 1322 to manage the relationship between the set sub-messages and the analysis processing programs 306; a message management storage unit 1323 to manage the relationship between the messages generated by the message generation unit 1313 and the analysis processing programs; and a processing program disposition management storage unit 1324 to manage the analysis processing servers 104 to which the analysis processing programs 306 are disposed. To note, the message setting entry server 106 may be simply referred to as an entry server.

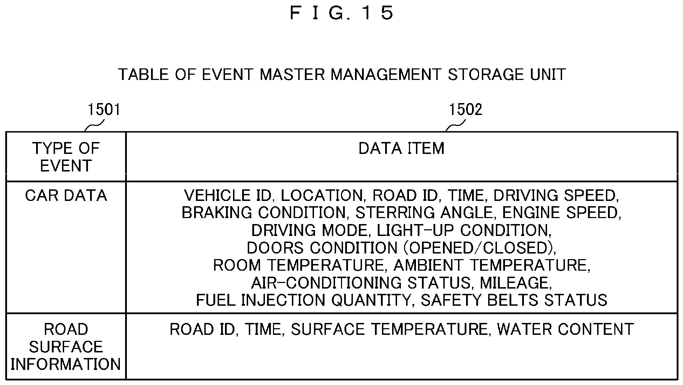

Such pieces of information are managed e.g. in the form of database and managed mainly on the hard disk or the memory especially when it is required to process them with high speed. As with pieces of the detailed table information of each storage unit, they are explained later with reference to the illustrations of Figs. 15 to 18 taking pieces of information on a vehicle as an example.

Figure 14 is a view illustrating one example of a sub-message setting entry screen 1401 displayed by the sub-message setting entry unit 1312. The sub-message setting entry screen 1401 includes a program loading button 1404 to load the analysis processing program 306; a processing program name entry column 1402 to enter the name of the processing program corresponding to the analysis processing program 306; a data items to be used setting column 1403 in which the data items and the key items of the types of events used by the analysis processing program 306 are set; and an entry button 1405 to associatively enter the set data items and the analysis processing program 306.

In this respect, with the setting of the data items to be used setting column 1403, the types of events and the data items to be used by the analysis processing program 306 loaded by the setter may be manually set or may be automatically set by the analysis processing program 306 being analyzed. Further, by the types of events and the data items being displayed on the screen, which data items and key items are those to be used for the types of events may be manually set or a check mark may be displayed on the screen to indicate that the data items and key items to be used have been set.

Figure 15 is a view illustrating one example when the event master management storage unit 1321 is arranged with a table. The event master management storage unit 1321 stores the type of events and the corresponding data items to be entered by the event entry unit 1311. In this example, the type of event 1501 and the data item 1502 are set correspondingly to each other.

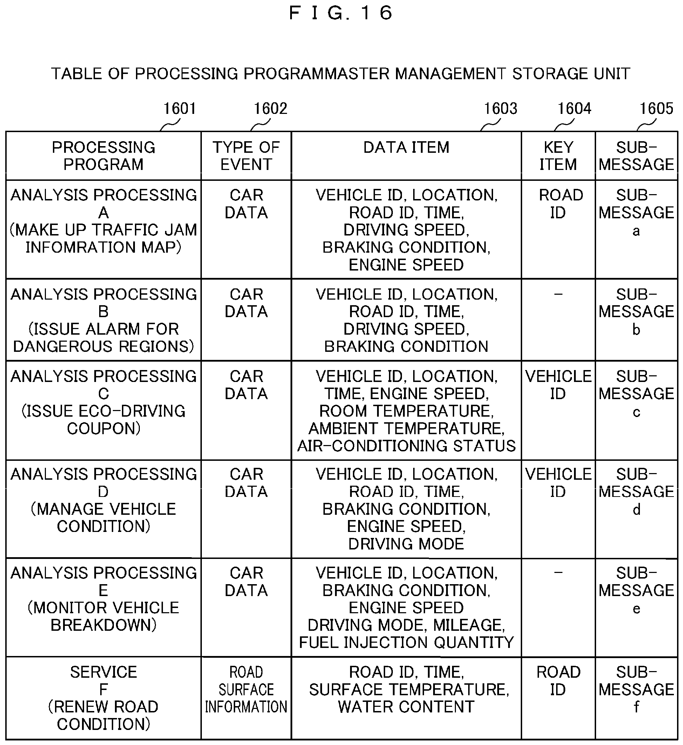

Figure 16 is a view illustrating one example when the processing program master management storage unit 1322 is arranged with a table. The processing program master management storage unit 1322 stores sub-messages including the analysis processing programs 306, the types of events, the data items and the key items which are entered through the setting screen of the sub-message setting entry unit 1312. In this example, the processing program 1601, the type of event 1602, the data item 1603, the key item 1604 and the sub-message 1605 are set correspondingly to one another.

To note, the sub-message 1605 is not included in the setting items of the sub-message setting entry screen 1401, in which the sub-message setting entry unit 1312 may allot an automatically and unequivocally identifiable sub-message through a so-called automatic numbering upon the entry button 1405 on the screen being clicked or the sub-message 1605 may be additionally included in the setting items of the sub-message setting entry screen 1401 so that it is manually set by the setter.

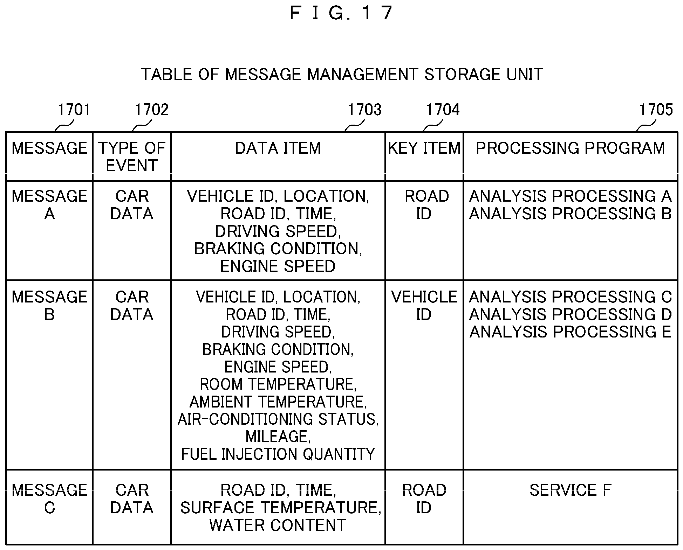

Figure 17 is a view illustrating one example when the message management storage unit 1323 is arranged with a table. The message management storage unit 1323 stores the relation between the message generated by the message generation unit 1313 and the analysis processing program 306. In this example, the message 1701, the type of event 1702, the data item 1703, the key item 1704 and the processing program 1705 are set correspondingly to one another. To note, an automatically and unequivocally identifiable message may be allotted for the message 1701 as well through automatic numbering.

Figure 18 is a view illustrating one example when the processing program disposition management storage unit 1324 is arranged with a table. The processing program disposition management storage unit 1324 stores the relation between the analysis processing program 306 disposed in the analysis processing server 104 and the message to be transferred. In this example, a server 1801, an IP address 1802, the number of threads 1803, the message 1804 and the processing program 1805 are set correspondingly to one another.

In the table of the processing program disposition management storage unit 1324, pieces of information on the analysis processing server 104 to operate as the message processing system are preliminarily set to the server 1801, the IP address 1802 and the number of threads 1803 respectively; and the relation between the message generated by the message generation processing unit 1313 and the analysis processing program 306 corresponding to the generated message is set to the message 1804 and the processing program 1805 respectively.

To note, in order that the analysis processing program is disposed to the analysis processing server 104 based on the relation between the analysis processing server 104 whose pieces of information are set and the analysis processing program 306, the setting distribution unit 1314 of the message setting entry server 106 may automatically distribute the analysis processing program 306 or such program may be manually disposed to such processing server by the designer with reference to the set pieces of information.

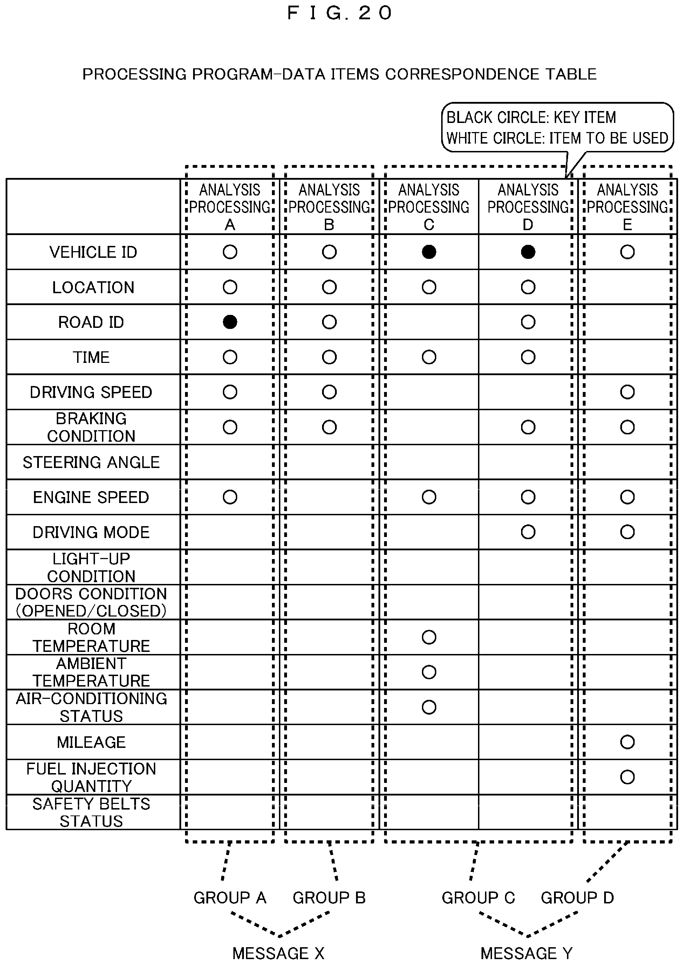

Figure 19 is a view illustrating one example of the operational flow when the message generation processing unit 1313 is realized with a program. On account that the program is executed by the CPU of the message setting entry server 106, explanation directed to the message generation processing unit 1313 may be centered on the CPU. The following explanation is centered on pieces of information to be temporarily used by the message generation processing unit 1313 and is given with reference to a processing program-data items correspondence table illustrated in Figure 20 as well.

The message generation processing unit 1313 is executed after the entry button 1405 of the sub-message setting registration screen 1401 is clicked and upon receiving pieces of information on the entered analysis processing program 306 and sub-message (types of events, data items and key items), firstly acquires the analysis processing programs 306, the data items and the key items of the same type of events as the received sub-message from the processing program master management storage unit 1322 (at Step 1901).

The message generation processing unit 1313 makes up the processing program-data items correspondence table as illustrated in Figure 20 based on the pieces of information acquired at Step 1901 (at Step 1902); then, arranges the analysis processing programs 306 having the same key items into groups (at Step 1903) based on the made-up processing program-data items correspondence table; and determines whether or not the number of analysis processing programs 306 within one group of the resulting groups is larger than the number of threads executable simultaneously and in juxtaposition with one server (at Step 1904).

If in the affirmative or in case where it is determined at Step 1904 that the number of such programs is larger than that of such threads, the message generation processing unit 1313 regroups the groups of the analysis processing programs 306 such that the number of such programs becomes smaller than the number of such threads; and upon the groups being regrouped, arranges the analysis processing programs 306 having the larger number of data items in common into the same group (at Step 1905).

If in the negative or in case where it is determined at Step 1904 that the number of such programs is smaller than that of such threads, the message generation processing unit 1313 consolidates the plural groups into the same group; and upon this consolidation as well, arranges the plurality of groups of analysis processing programs 306 having the larger number of data items in common into the same group (at Step 1906). According to the example illustrated in Figure 20, firstly upon grouping the analysis processing programs in terms of the key items, the analysis processing A, the analysis processing B, the analysis processing C and the analysis processing D due to both having the same key items and the analysis processing E are arranged into a group A, a group B, the same group or a group C and a group D respectively.

In this example, on account that it is supposed that the analysis processing groups 306 to which any key items are not set should belong to different groups, the analysis processing B and the analysis processing E result in the group B and the group D respectively. Just because it is determined that the number of analysis processing programs 306 within one group of the resulting groups is smaller than the number of threads of one server, the groups are consolidated into the same group. In other words, the groups A and B having the larger number of data items in common are consolidated into the same group while the groups C and D having the larger number of data items in common are consolidated into the same group.

The message generation processing unit 1313 defines what the data items used in common within the respective resulting groups are summarized as a message (at Step 1907); enters the defined message to the message management storage unit 1323 (at Step 1908); and determines the analysis processing servers 104 in destination to which the analysis processing programs 306 are disposed such that such programs becomes equivalent in number according to the unit of such defined message (at Step 1910) so as to store such destination in the processing program disposition management storage unit 1324.

Thus, according to the example illustrated in Figure 20, a message X is defined for one group in which the group A and the group B are consolidated while a message Y is defined for one group in which the group C and the group D are consolidated. Further, as with the message defined for the respective groups, pieces of information having different values may be defined for different groups or the message may be generated or allotted to the respective groups through a so-called automatic numbering.

To note, it is explained above that the groups of the sub-messages are based on the key items and data items in common, but determination may be made on to which group the other additionally itemized sub-messages should belong.

As described above, by extracting the data items to be used by the analysis processing programs 306 for the received events and generating a message of smaller data amount; by allotting the same message to the analysis processing programs 306 which use the larger number of data items in common; by the analysis processing servers 104 to execute the analysis processing programs 306 generating a sub-message which makes reference to the message of the shared memory for each of the analysis processing programs 306, it allows the number of the transferred messages to be reduced and the resources of the system as a whole to be utilized with efficiency.

Further, upon the analysis processing server 104 generating the sub-messages based on the messages, the messages are stored in the shared memory; and the sub-messages make reference to the shared memory, thereby, even upon generating a plurality of sub-messages, allowing such sub-messages to be generated without data being unnecessarily copied, so that the memory can be put to efficient use.

Further, the allotment processing server 103 performs appropriate dynamic load distribution by the message allotment in which it is decided that the messages having the same key values are transferred to the same analysis processing server 104 in destination and those having the different key values are transferred to the analysis processing server 104 according to the load conditions concerned; and even when pieces of information on the specific one data value are chronologically processed such as monitoring the behaviors of the same vehicle ID, such pieces of information are transferred to the same analysis processing server 104, so that processing load e.g. in the form of exclusive control with the other analysis processing servers is dispensed with, thereby, allowing analysis processing to be executed in a short time.

Moreover, just by defining a message with a sub-message including the events, the data items and the key items for each of the analysis processing programs 306, the data items in common among the analysis processing programs 306 are determined, thereby, a message having the sub-messages summed up being generated; and by distributing these pieces of information to the allotment processing server 103 and the analysis processing server 104, it allows pieces of information on definitions necessary for operating the system to be set with facility.

### (Second Example 2)

In the present example, explanation is given on the specific example in which a plurality of allotment processing servers 103 is disposed, which leads to the processing bottleneck of the system in case where there are a number of communication devices 101 and larger traffic to be transmitted by the communication devices 101.

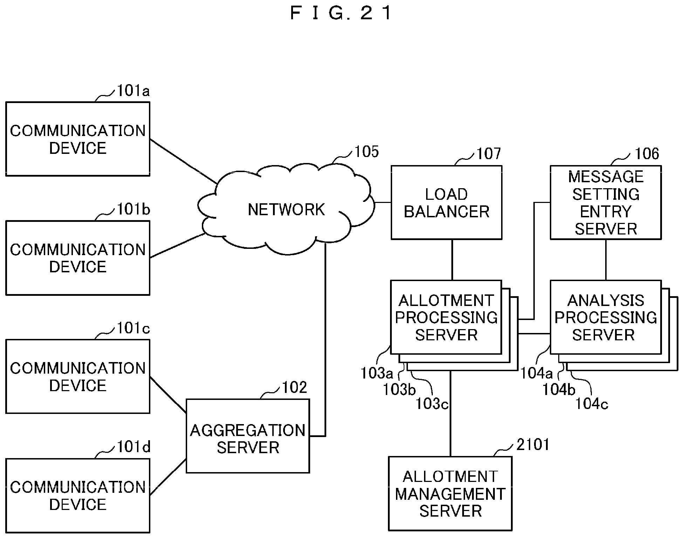

Figure 21 is a view illustrating one example of the entire arrangement of the system according to the second example. Compared with the entire arrangement of the system according to the first example described with reference to the illustration of Figure 1, in this example, a load balancer 107 is disposed between the network 105 and the allotment processing server 103 and an allotment management server 2101 is disposed to enable data to be shared among the plurality of allotment processing servers 103a, 103b and 103c.

The allotment management server 2101, due to the facts that the allotment processing server 103 is present in plurality and the events are allotted to the allotment processing servers 103 by the anterior load balancer 107 and to enable data to be shared among the plurality of allotment processing servers 103a, 103b and 103c, has a part of the structural components of the allotment processing server 103.

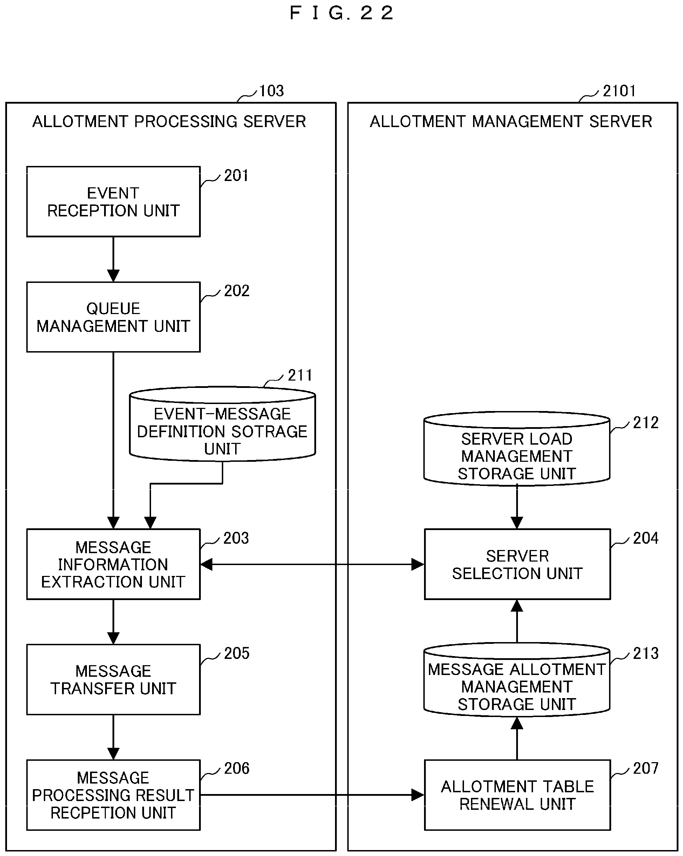

Concretely speaking, as illustrated in Figure 22, the allotment management server 2101 includes the server selection unit 204, the allotment table renewal unit 207, the server load management storage unit 212 and the message allotment management storage unit 213 which are included in the allotment processing server 103 described with reference to the illustration of Figure 1. In this case, the allotment processing servers 103 include the event reception unit 201, the queue management unit 202, the message information extraction unit 203, the message transfer unit 205, the message processing result reception unit 206 and the event-message definition storage unit 211 which are described above with reference to the illustration of Figure 1.

The allotment processing servers 103 are not necessarily provided with the respective units of the allotment management server 2101 or programs corresponding to such units may not be stored in the server. On the other hand, the allotment processing servers 103 may be provided with the respective units of the allotment management server 2101 or programs corresponding to such units may be stored therein, but such units or programs are not necessarily executed.

The operational order of each unit is as described with reference to the illustration of Figure 1 or the server selection unit 204 is called out subsequent to the message information extraction unit 203; then the message transfer unit 205 is called out; and upon the message processing result reception unit 206 receiving the result from the analysis processing server 104, the allotment table renewal unit 207 is called out.

When the operational cross-over happens between the allotment processing servers 103 and the allotment management server 2101, communication between the allotment processing servers 103 and the allotment management server 2101 is established, in which the allotment management server 2101 performs exclusive control or order control on requests such as the server selection request or the allotment table renewal request when such requests occur simultaneously from the plurality of allotment processing servers 103a, 103b and 103c.

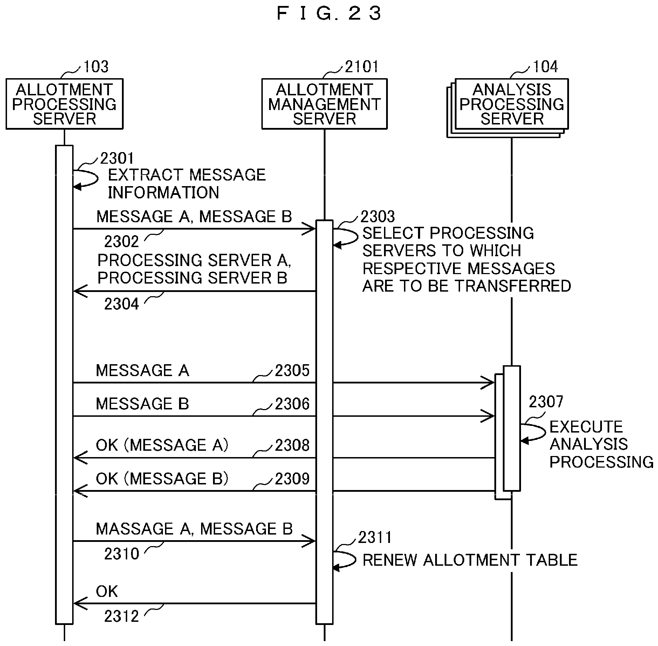

Figure 23 is a view illustrating one example of the operational sequences of the allotment processing servers 103 and the allotment management server 2101. In the first place, the allotment processing servers 103 extract the data items from the events and extract pieces of information on the corresponding messages so as to specify the messages (at Step 2301); and transmit the specified messages to the allotment management server 2101 (at Step 2302) .

The allotment management server 2101 selects the analysis processing servers 104 to which the respective messages are to be transferred (at Step 2303); and sends back pieces of information on the selected analysis processing servers 104 to the allotment processing servers 103 (at Step 2304). The allotment processing servers 103 transmit the message to the analysis processing servers 104 selected by the allotment management server 2101 respectively (at Step 2305 and Step 2306).

The analysis processing servers 104 execute the analysis processing corresponding to the received message (at Step 2307) and send a reply back to the allotment processing servers 103 (at Step 2308 and Step 2309). Upon the allotment processing servers 103 receiving the replies from the analysis processing servers 104, they transmit a notice to the effect that the analysis processing is over for each of the messages to the allotment management server 2101 (at Step 2310). The allotment management server 2101 renews the table of the message allotment management storage unit 213 and notices the allotment processing servers 103 of renewal being completed, thereby, a series of operations coming to an end.

As described above, even when plural allotment processing servers 103 are disposed, pieces of information on transfer to the analysis processing servers 104 which are to be shared among the allotment processing servers 103 are managed independently and exclusively by the allotment management server 2101, thereby, such operational steps described according to the first example are kept intact or feasible also in this example as transferring messages according to the load statuses of the analysis processing servers 104 and messages having the same key values being transferred to the same analysis processing server 104.

### Reference Signs List

- 101:: communication device
- 102:: aggregation server
- 103:: allotment processing server
- 104:: analysis processing server
- 105:: network
- 106:: message setting entry server
- 2101:: allotment management server

## Claims

1. A processing system comprising an allotment server to receive events and to distribute the events to a plurality of processing servers and an entry server to set pieces of information to the allotment server,
wherein the events include types of events and data items used upon the plurality of processing servers executing data processing;
the entry server, to which the pieces of information on the types of events and the data items and the pieces of information on the data processing of the processing servers and the data items are input, divides pieces of the data processing of the processing servers into groups based on the data items; allots a message to the groups; and transmits the pieces of information on the types of events, the message, the data items and the processing servers whose pieces of data processing are grouped to the allotment server,
while the allotment server stores the pieces of information as received from the entry server on the types of events, the message, the data items and the processing servers whose pieces of data processing are grouped;
upon receiving the events, specifies the message corresponding to the received events based on the data items included in the received events and the stored data items; selects the processing server to which the specified message is to be transferred according to load applied to the processing servers within the groups; and transfers the specified message to the selected processing server.

2. The processing system according to claim 1,
wherein the entry server arranges the pieces of data processing of the processing servers using the data items in common into the same group upon arranging the pieces of data processing of the processing servers into the groups based on the data items, and
while the allotment server stores the pieces of information on the message, the data items and the processing servers correspondingly to one another for each of the groups upon storing the pieces of information as received from the entry server on the types of events, the message, the data items and the processing servers whose pieces of data processing are grouped.

3. The processing system according to claim 1,
wherein the allotment server stores pieces of information on the processing server to which the specified message has been transferred and the specified message correspondingly to one another as having been allotted.

4. The processing system according to claim 3,
wherein the events further include key items and key values corresponding to values of the key items;
the entry server, to which the key items are further input, arranges the pieces of data processing of the processing servers using the key items in common into the same group upon arranging the pieces of data processing of the processing servers into the groups based on the data items; and further transmits the key items to the allotment server,
while the allotment server stores the pieces of information on the message, the data items, the key items and the processing servers correspondingly to one another for each of the groups upon storing the pieces of information as received from the entry server on the types of events, the message, the data items and the processing servers whose pieces of data processing are grouped; determines whether or not the same message and key values as the specified message and the key values included in the received events are stored as having been allotted;
if in the affirmative, transfers the specified message to the processing server which is specified by the pieces of information on the processing server having been stored correspondingly to the same message and key values as having been allotted;
if in the negative, selects the processing server to which the specified message is to be transferred according to the load applied to the processing servers within the groups; and transfers the specified message to the selected processing server.

5. The processing system according to claim 4,
wherein the allotment server, when it is determined that the same message and key values as the specified message and the key values included in the received events are not stored as having been allotted, further stores the key values included in the events as having been allotted.

6. The processing system according to claim 5,
wherein the allotment server, upon receiving processing result from the processing server to which the specified message has been transferred, deletes the pieces of information on the processing server which has transmitted the processing result from the pieces of information stored as having been allotted.

7. The processing system according to claim 4,
wherein the entry server arranges the pieces of data processing of the processing servers using the key items in common into the same group upon arranging the pieces of data processing of the processing servers into the groups based on the data items; determines whether or not the number of processing programs included in one of the groups is larger than the number of threads of the processing server;
if in the affirmative, further arranges the pieces of data processing of the processing servers using the data items in common into the same group; and
if in the negative, consolidates the groups into the same group.

8. The processing system according to claim 7,
wherein the entry server determines according to a unit of the message to which one of the processing servers the pieces of data processing are disposed such that the pieces of data processing become equivalent in number among the plurality of processing servers.

9. The processing system according to claim 1,
wherein the processing system further includes the processing servers; the processing servers, upon receiving the message from the allotment server, determines whether or not the number of pieces of data processing corresponding to the received message is plural; and
if in the affirmative, stores the received message into a shared area; generates a sub-message which makes reference to the shared area; and replaces the received message with the generated sub-message.

10. The processing system according to claim 9,
wherein the processing servers, upon further receiving the key values from the allotment server, determines whether or not it is entered that the same message and key values as the received message and key values are in execution;
if in the affirmative, makes an entry to the effect that the received message and key values are in stand-by for execution;
if in the negative, makes an entry to the effect that the received message and key values are in execution to execute the data processing; upon completing the data processing, deletes entered pieces of information on the message and key values included in the completed data processing; and revokes the stand-by for execution on the same entered message and key values as the message and key values included in the completed data processing.

11. A processing method to receive events and distribute pieces of data processing to a plurality of processing servers,
the events including types of events and data items used upon the plurality of processing servers executing the data processing; and
pieces of information on the types of events and the data items and pieces of information on the data processing of the processing servers and the data items being input,
wherein the method comprises the steps of: arranging the pieces of data processing of the processing servers into groups based on the data items;
allotting a massage for the groups;
storing the pieces of information on the types of events, the message, the data items and the processing servers whose pieces of data processing are grouped;
upon receiving the events, specifying the message corresponding to the received events based on the data items included in the received events and the stored data items;
selecting the processing server to which the specified message is to be transferred according to load applied to the processing servers within the groups; and transferring the specified message to the selected processing server.

12. The processing method according to claim 11 comprising:
arranging the pieces of data processing of the processing servers using the data items in common into the same group upon dividing the pieces of data processing of the processing servers into the groups based on the data items; and
storing the pieces of information on the message, the data items and the processing servers correspondingly to one another for each of the groups upon storing the pieces of information on the types of events, the message, the data items and the processing servers whose pieces of data processing are grouped.
